# EUROPÄISCHE PATENTSCHRIFT

(11) **EP 1 760 898 B1**
(45) Veröffentlichungstag und Bekanntmachung des Hinweises auf die Patenterteilung: **05.03.2008**
(21) Anmeldenummer: 06017722.7
(22) Anmeldetag: 25.08.2006
(51) Int. Cl.: H04B 1/38, H04L 27/06

(54) **Verfahren und Vorrichtung zum Erkennen der Belegung eines Nachbarkanals mit einem Signal**
Method and device for determining the occupation by a signal of an adjacent channel.
Procédé et disposif pour reconnaître l'occupation par un signal d'un canal voisin.

(30) Priorität: 01.09.2005 DE 102005041503
(43) Veröffentlichungstag der Anmeldung: 07.03.2007
(73) Patentinhaber: ATMEL Germany GmbH, 74072 Heilbronn (DE)
(72) Erfinder: Sachse, Eric, 01109 Dresden (DE); Haentzschel, Dirk, 01833 Dürröhrsdorf-Dittersbach (DE); Schmidt, Michael Dr., 01324 Dresden (DE)
(74) Vertreter: Müller, Wolf-Christian

(56) Entgegenhaltungen:
- WO-A-01/93439
- WO-A-20/04098141
- US-A1- 2004 266 383
- US-B1- 6 473 417

## Beschreibung

Die vorliegende Erfindung betrifft ein Verfahren zum Erkennen der Belegung eines Nachbarkanals mit einem Signal anhand eines komplexwertigen Bandpasssignals, das einen Nutzkanalanteil und/oder einen Nachbarkanalanteil aufweist. Die Erfindung betrifft weiterhin eine entsprechende Vorrichtung zur Belegungserkennung sowie eine Sende-/Empfangsvorrichtung und eine integrierte Schaltung mit einer solchen Vorrichtung.

Die Erfindung liegt auf dem Gebiet der Telekommunikation.

Aus US 6 473 417 B1 ist ein Verfahren zum Reduzieren von Gleichkanalstörungen in einem CDMA-Funktelefonsystem bekannt, bei dem ein Signal eines sog. "traffic channels" Informationen einer Vielzahl von CDMA-Datensignalen enthält, die vor der Übertragung mittels jeweils eines unterschiedlichen Walsh-Codes moduliert wurden. Empfängerseitig wird ein Signal mit reduzierten Gleichkanalstörungen gebildet, indem ein Interferenzsignal subtrahiert wird. Ein dekodiertes Signal wird gebildet, indem Informationen dekodiert werden, die das Signal mit reduzierten Gleichkanalstörungen repräsentieren. Hierzu wird ein Decoder verwendet, der eine Vielzahl von Metrikwerten ausgibt. Diese Metrikwerte werden dann einer Rückkopplungsschleife zugeführt, die das Interferenzsignal bildet.

Die Erfindung liegt insbesondere auf dem Gebiet von Telekommunikationssystemen, bei denen eine Vielzahl von Sende-/Empfangsvorrichtungen nach dem Frequenzmultiplex-Zugriffsverfahren (FDMA) auf spektral beabstandete (Trägerfrequenz-)Kanäle zugreifen. In der Empfangseinheit jeder Sende-/Empfangsvorrichtung ist hierbei einerseits sicherzustellen, dass die über den "eigenen" Kanal ("Nutzkanal") empfangenen Daten korrekt detektiert werden, *auch wenn* in einem spektral benachbarten Kanal ("Nachbarkanal") zeitgleich Daten anderer Sende-/Empfangsvorrichtungen übertragen werden und daher das Empfangssignal Nutzkanal- und Nachbarkanalanteile aufweist. Andererseits ist sicherzustellen, dass in einem Nachbarkanal übertragene und nicht für die eigene Sende-/Empfangsvorrichtung bestimmte Daten durch die Empfangseinheit auch dann *nicht* detektiert werden, wenn im Nutzkanal keine Daten übertragen werden und das Empfangssignal infolgedessen nur einen Nachbarkanalanteil aufweist.

Üblicherweise werden Nachbarkanalsignalanteile in den Empfangseinheiten der Sende-/Empfangsvorrichtungen durch analoge Empfangsfilter mit hinreichend steilen Filterflanken unterdrückt. Nachteilig ist hierbei, dass solche Empfangsfilter in ihrem Aufbau komplex und daher kostenintensiv sind. Mit dem komplexen Aufbau geht auch ein erhöhter Energiebedarf des Empfangsfilters einher. Realisierungsaufwand und Energieverbrauch steigen weiter, wenn Vorkehrungen getroffen werden müssen, die Wertschwankungen der für die analogen Empfangsfilter verwendeten Bauteile infolge von Herstellungstoleranzen, Temperatur- und/oder Alterungseinflüssen zu kompensieren.

Wenngleich prinzipiell auf beliebige FDMA-Telekommunikationssysteme anwendbar, werden die vorliegende Erfindung sowie die ihr zugrunde liegende Problematik nachfolgend anhand eines "ZigBee"-Kommunikationssystems gemäß IEEE 802.15.4 erläutert.

Zur drahtlosen Übertragung von Informationen über relativ kurze Distanzen (ca. 10m) können sog. "Wireless Personal Area Networks" (WPANs) verwendet werden. Im Gegensatz zu "Wireless Local Area Networks" (WLANs) benötigen WPANs zur Datenübertragung wenig oder sogar keine Infrastruktur, so daß kleine, einfache, energieeffiziente und kostengünstige Geräte für einen breiten Anwendungsbereich implementiert werden können.

Der Standard IEEE 802.15.4 spezifiziert niederratige WPANs, die mit Rohdatenraten bis 250 kbit/s und ortsfesten oder mobilen Geräten für Anwendungen in der industriellen Überwachung und Steuerung, in Sensornetzwerken, in der Automatisierung, sowie im Bereich der Computerperipherie und für interaktive Spiele geeignet sind. Neben einer sehr einfachen und kostengünstigen Implementierbarkeit der Geräte ist für derartige Anwendungen ein extrem geringer Energiebedarf der Geräte von entscheidender Bedeutung. So werden mit diesem Standard Batterielaufzeiten von mehreren Monaten bis mehrere Jahre angestrebt.

Auf der Ebene der physikalischen Schicht spezifiziert IEEE 802.15.4 im nahezu weltweit verfügbaren ISM-Band (industrial, scientific, medical) um 2,4 GHz insgesamt 16 (Trägerfrequenz-)Kanäle im Abstand von jeweils 5 MHz. Für Rohdatenraten von 250 kbit/s ist in diesen Kanälen eine symbolwertspezifische PN-Bandspreizung (pseudo noise spreading) mit einer Chiprate von fC=2 Mchip/s sowie eine Offset-QPSK-Modulation vorgesehen (quarternary phase shift keying).

Die Datenübertragung erfolgt prinzipiell mit Hilfe von Rahmen. Die eigentlichen Nutzdaten ("data payload", MSDU) werden hierbei sendeseitig auf der Ebene der MAC-Schicht (medium access control) durch Kontroll- und Steuerdaten, wie z.B. eine Sequenznummer, Adressfelder und eine Rahmenprüfsequenz ergänzt. Der resultierende MAC-Rahmen (MPDU) wird auf der Ebene der physikalischen Schicht durch Voranstellen weiterer Steuerdaten, wie z.B. eines Synchronisations-Headers, der der Empfangseinheit eine Synchronisation und ein Einrasten auf den Datenstrom ermöglicht, zum letztendlich zu sendenden Datenrahmen ("data frame", PPDU) erweitert.

Werden die analogen Empfangsfilter aus Gründen der Komplexität und des Energieverbrauchs weniger steilflankig ausgeführt und infolgedessen die Nachbarkanalsignalanteile weniger stark unterdrückt, so kann sich das Problem stellen, daß in Situationen, in denen zwar ein Nachbarkanalsignal, jedoch kein Nutzkanalsignalanteil empfangen wird, die im Empfangssignal enthaltenen Nachbarkanaldaten aufgrund der sehr hohen Empfindlichkeit heutiger Empfangseinheiten korrekt detektiert und irrtümlich als Nutzkanaldaten an die Kontrolleinheit der Sende-/Empfangsvorrichtung weitergeleitet werden. Erst auf der Ebene der MAC-Schicht wird dann in der Kontrolleinheit z.B. durch einen Vergleich der erwarteten Nummer oder Adresse mit der tatsächlichen Nummer bzw. Adresse des MAC-Rahmens (MPDU) festgestellt, daß dieser Rahmen z.B. gar nicht für diese Sende-/Empfangsvorrichtung bestimmt und daher zu verwerfen ist. Bevor ein solcher Vergleich der Nummern bzw. Adressen des MAC-Rahmens (MPDU) durchgeführt werden kann, muß der komplette Datenrahmen (PPDU) von der Empfangseinheit detektiert werden. Nachteilig ist hierbei, daß die Empfangseinheit in dieser Zeitspanne (Dauer einer PPDU) nicht für die Detektion wirklicher Nutzkanaldaten zur Verfügung steht. Nachteilig ist weiterhin, daß die Kontrolleinheit, die oft als separate integrierte Schaltung ausgeführt ist, für den Vergleich der Nummern bzw. Adresse zusätzlich Energie verbraucht.

Vor diesem Hintergrund liegt der Erfindung die Aufgabe zugrunde, ein Verfahren und eine Vorrichtung zum schnellen und zuverlässigen Erkennen der Belegung eines Nachbarkanals anzugeben, die es ermöglichen, Sende-/Empfangsvorrichtungen einfach und kostengünstig zu implementieren und energiesparend zu betreiben.

Erfindungsgemäß wird diese Aufgabe gelöst durch ein Verfahren, eine Vorrichtung, eine Sende-/Empfangsvorrichtung und eine integrierte Schaltung mit den Merkmalen der Patentansprüche 1, 14, 25 bzw. 26.

Das erfindungsgemäße Verfahren sieht folgende Schritte vor: a) Ableiten eines reellwertigen Bandpaßsignals, indem das komplexwertige Bandpaßsignal gefiltert und vom gefilterten Signal der Realteil gebildet wird, b) Überführen des reellwertigen Bandpaßsignals in ein erstes Basisbandsignal, c) Filtern des ersten Basisbandsignals, so daß vom Nutzkanalanteil beeinflußte Spektralanteile unterdrückt werden, und bereitstellen eines ersten gefilterten Signals, und d) Auswerten des ersten gefilterten Signals und Erzeugen eines binären Belegungssignals zur Angabe der Belegung des Nachbarkanals in Abhängigkeit vom ausgewerteten ersten gefilterten Signal.

Die erfindungsgemäße Vorrichtung weist folgende Einheiten auf: a) eine analoge Filtereinheit, die ausgebildet ist, ein reellwertiges Bandpaßsignal abzuleiten, indem das komplexwertige Bandpaßsignal gefiltert und vom gefilterten Signal der Realteil gebildet wird, b) eine mit der analogen Filtereinheit verbundene Transformationseinheit, die ausgebildet ist, das reellwertige Bandpaßsignal in ein erstes Basisbandsignal zu überführen, c) eine mit der Transformationseinheit verbundene digitale Filtereinheit, die ausgebildet ist, das erste Basisbandsignal derart zu filtern, daß vom Nutzkanalanteil beeinflußte Spektralanteile unterdrückt werden, und ein erstes gefiltertes Signal bereitzustellen, und d) eine mit der digitalen Filtereinheit verbundene Auswerteeinheit, die ausgebildet ist, das erste gefilterte Signal auszuwerten und ein binäres Belegungssignals zur Angabe der Belegung des Nachbarkanals in Abhängigkeit vom ausgewerteten ersten gefilterten Signal zu erzeugen.

Die erfindungsgemäße Sende-/Empfangsvorrichtung und die erfindungsgemäße integrierte Schaltung weisen jeweils eine solche Vorrichtung auf.

Das Wesen der Erfindung besteht darin, aus dem komplexwertigen Bandpaßsignal, das beispielsweise durch eine Herabmischung des empfangenen Funksignals (Empfangssignals) in einen Zwischenfrequenzbereich entstanden ist, zunächst ein reellwertiges Bandpaßsignal abzuleiten, indem das komplexwertige Bandpaßsignal gefiltert und vom resultierenden gefilterten Signal nur der Realteil gebildet wird. Das so erzeugte reellwertige Bandpaßsignal weist spektral sich teilweise überlappende Nachbarkanal- und Nutzkanalanteile auf, sofern beide Anteile vorhanden sind. Durch die nur teilweise spektrale Überlappung können Spektralanteile, die nicht vom Nutzkanalanteil beeinflußt werden, zuverlässig durch Filtern selektiert und laufend, d.h. während des Empfangs des Datenrahmens, ausgewertet werden. Eine Detektion des kompletten Datenrahmens ist nicht erforderlich. Das binäre Belegungssignal, das die Belegung des Nachbarkanals angibt, liegt daher zu einem deutlich früheren Zeitpunkt vor, z.B. noch vor der Detektion der eigentlichen Nutzdaten (MSDU). Auf diese Weise wird die Belegung des Nachbarkanals also schnell und zuverlässig erkannt. Wird der Nachbarkanal als belegt erkannt, so kann die Empfangseinheit früher für die Detektion weiterer Daten bereitstehen.

Durch die Bildung des Realteils des gefilterten Signals kann die nachfolgende Signalverarbeitung außerdem reellwertig erfolgen, so daß insbesondere nur ein Analog/Digital-Wandler erforderlich ist (anstelle von zwei Wandlern für eine komplexwertige Signalverarbeitung), was sowohl den Realisierungsaufwand als auch den Energieverbrauch der Sende-/Empfangsvorrichtung erheblich senkt. Da auch die weiteren Schritte einfach zu realisieren sind, ist es damit möglich, Sende-/Empfangsvorrichtungen einfach und kostengünstig zu implementieren und energiesparend zu betreiben.

Vorteilhafte Ausgestaltungen und Weiterbildungen der Erfindung sind den abhängigen Ansprüchen sowie der Beschreibung unter Bezugnahme auf die Zeichnung zu entnehmen.

In einer vorteilhaften Ausgestaltung wird das erste gefilterte Signal ausgewertet, indem von Werten eines binären Signals, das vom ersten gefilterten Signal abhängt, Medianwerte bestimmt werden. Medianwerte von binären (zweistufigen) Signalwerten lassen sich vorteilhaft auf sehr einfache Weise bestimmen, so daß sich die Implementierung und der Energieverbrauch von Sende-/Empfangsvorrichtungen weiter verringert.

In einer weiteren vorteilhaften Ausgestaltung wird das erste gefilterte Signal ausgewertet, indem von Werten eines Signals, das vom ersten gefilterten Signal abhängt, Mittelwerte bestimmt werden (ungewichtete, gewichtete, RMS-Werte etc.). Hierdurch ist vorteilhaft eine noch zuverlässigere Erkennung der Nachbarkanalbelegung möglich.

Gemäß einer bevorzugten Weiterbildung der Erfindung wird das binäre Belegungssignal erzeugt, indem ein erstes binäres Signal mit einem zweiten binären Signal logisch ODER-verknüpft wird, wobei das erste binäre Signal erzeugt wird, indem die Werte des ersten gefilterten Signals einzeln ausgewertet werden, und das zweite binäre Signal erzeugt wird, indem die Werte des ersten gefilterten Signals mittels einer gleitenden Fensterung ausgewertet werden. Durch diese Kombination von Momentanwertauswertung und gedächtnisbehafteter Auswertung des ersten gefilterten Signals wird eine sehr zuverlässige und schnelle Erkennung der Belegung des Nachbarkanals erreicht, da sowohl kurzzeitig hohe Signalpegel als auch länger andauernde leicht erhöhte Pegel durch die ODER-Verknüpfung erkannt werden. Durch die logische Verknüpfung binärer Signale wird eine weitere Reduzierung des Implementierungsaufwandes und des Energieverbrauchs erreicht.

In einer vorteilhaften Ausgestaltung werden die Werte des ersten gefilterten Signals einzeln ausgewertet, indem sie betragsmäßig mit einem ersten Vergleichswert verglichen werden und das erste binäre Signal einen Wert von logisch 1 annimmt, falls der entsprechende Wert des ersten gefilterten Signals den ersten Vergleichswert betragsmäßig übersteigt bzw. einen Wert von logisch 0 annimmt, falls dies nicht der Fall ist. Eine derartige Auswertung ist vorteilhaft sehr einfach zu realisieren und energiesparend durchzuführen.

Vorzugsweise handelt es sich beim ersten Vergleichswert um einen Schwellwert, was die Realisierung weiter vereinfacht.

In einer weiteren Ausgestaltung gibt jeder Wert des zweiten binären Signals einen Median von N Werten eines binären Hilfssignals an, wobei N die Fensterlänge bezeichnet und das binäre Hilfssignal vom ersten gefilterten Signal abhängt. Durch die Verwendung eines binären, d.h. zweistufigen Hilfssignals vereinfacht sich die Medianbestimmung, so daß sich die Auswertung des ersten gefilterten Signals insgesamt weniger aufwendig gestaltet.

Vorzugsweise werden die Werte des ersten gefilterten Signals betragsmäßig mit einem zweiten Vergleichswert verglichen. Das binäre Hilfssignal nimmt einen Wert von logisch 1 an, falls der entsprechende Wert des ersten gefilterten Signals den zweiten Vergleichswert betragsmäßig übersteigt, und einen Wert von logisch 0, falls dies nicht der Fall ist. Auf diese Weise wird das binäre Hilfssignal einfach aus dem ersten gefilterten signal abgeleitet.

Vorzugsweise handelt es sich beim zweiten Vergleichswert um einen Schwellwert, was die Realisierung weiter vereinfacht.

In einer weiteren Ausgestaltung wird das reellwertige Bandpaßsignal außerdem in ein zweites Basisbandsignal überführt, das derart gefiltert wird, daß vom Nachbarkanalanteil beeinflußte Spektralanteile unterdrückt werden. Das so erzeugte zweite gefilterte Signal wird ebenfalls ausgewertet und das binäre Belegungssignal in Abhängigkeit vom ausgewerteten ersten gefilterten Signal und vom ausgewerteten zweiten gefilterten Signal erzeugt. Hierdurch ist vorteilhaft eine noch zuverlässigere Erkennung der Nachbarkanalbelegung möglich.

Vorzugsweise hängt hierbei der erste, vorzugsweise aber auch der zweite Vergleichswert vom zweiten gefilterten Signal ab.

In einer weiteren Ausgestaltung werden die im komplexwertigen Bandpaßsignal enthaltenen Datenwerte detektiert und die Detektion abgebrochen, sobald das binäre Belegungssignal die Belegung des Nachbarkanals signalisiert. Durch das Abbrechen des Detektionsprozesses, sobald der Nachbarkanal als belegt erkannt wurde, steht die Empfangseinheit für die Detektion weiterer Daten vorteilhaft zu einem früheren Zeitpunkt wieder zur Verfügung.

Die Erfindung wird nachfolgend anhand der in den schematischen Figuren der Zeichnung angegebenen Ausführungsbeispiele näher erläutert. Hierbei zeigen
Fig. 1 Beispiel eines "Wireless Personal Area Network" (WPAN) nach IEEE 802.15.4 mit erfindungsgemäßen Sende-/Empfangsvorrichtungen;
Fig. 2 Ausführungsbeispiele einer Empfangseinheit einer Sende-/Empfangsvorrichtung nach IEEE 802.15.4 mit erfindungsgemäßer Vorrichtung;
Fig. 3 Betragsspektren verschiedener Signale aus Figur 2; und
Fig. 4 Ausführungsbeispiele der Auswerteeinheit aus Figur 2.

In den Figuren sind gleiche und funktionsgleiche Elemente und Signale - sofern nicht anders angegeben - mit denselben Bezugszeichen versehen.

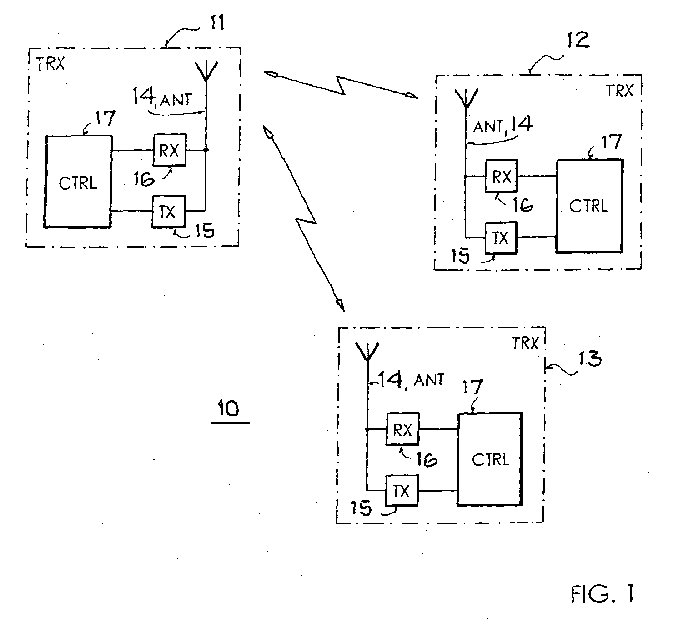

Figur 1 zeigt ein Beispiel eines "Wireless Personal Area Networks" (WPAN) 10 nach dem IEEE-Standard 802.15.4. Es umfaßt drei Sende-/Empfangsvorrichtungen (transceiver, TRX) 11-13 in Form von ortsfesten oder mobilen Geräten, die mittels Funksignalen drahtlos Informationen austauschen. Bei der Sende-/Empfangsvorrichtung 11 handelt es sich um ein sog. Vollfunktionsgerät, das die Funktion des WPAN-Koordinators übernimmt, während es sich bei den Sende-/Empfangsvorrichtungen 12, 13 um sog. Teilfunktionsgeräte handelt, die dem Vollfunktionsgerät 11 zugeordnet sind und nur mit diesem Daten austauschen können. Neben der in Figur 1 dargestellten sternförmigen Netzwerktopologie, bei der die bidirektionale Datenübertragung nur zwischen jeweils einem der Teilfunktionsgeräte 12,13 und dem Vollfunktionsgerät 11, nicht jedoch zwischen den Teilfunktionsgeräten 12, 13 erfolgen kann, sieht der Standard auch sog. "Peer-to-Peer"-Topologien vor, bei denen sämtliche Vollfunktionsgeräte mit jeweils allen anderen Vollfunktionsgeräten kommunizieren können.

Die Sende-/Empfangsvorrichtungen 11-13 umfassen jeweils eine Antenne 14, eine mit der Antenne verbundene Sendeeinheit (transmitter, TX) 15, eine mit der Antenne verbundene Empfangseinheit (receiver, RX) 16 und eine mit der Sende- und der Empfangseinheit verbundene Kontrolleinheit (control unit, CTRL) 17 zur Steuerung der Sende- und Empfangseinheiten 15, 16. Weiterhin beinhalten die Sende-/Empfangsvorrichtungen 11-13 jeweils eine in Figur 1 nicht dargestellte Energieversorgungseinheit in Form einer Batterie etc. zur Energieversorgung der Einheiten 15-17, sowie eventuell weitere Komponenten wie Sensoren, Aktoren etc..

Im folgenden wird davon ausgegangen, daß die Datenübertragung im ISM-Band (industrial, scientific, medical) bei 2,4 GHz erfolgt. Wie in der Beschreibungseinleitung erläutert, spezifiziert IEEE 802.15.4 in diesem Frequenzband insgesamt 16 Kanäle im Abstand von jeweils 5 MHz. Für Rohdatenraten von 250 kbit/s ist in diesen Kanälen eine Bandspreizung (Spreading) mit einer Chiprate von fC=2 Mchip/s sowie eine Offset-QPSK-Modulation (quarternary phase shift keying) vorgesehen.

Die Sendeeinheit 15 jeder Sende-/Empfangsvorrichtung wandelt den jeweils zu sendenden Datenstrom gemäß IEEE 802.15.4 in ein über ihre Antenne 14 abzustrahlendes Funksignal um, indem der jeweils zu sendende Datenstrom zunächst in vier Bit breite Symbole und diese in aufeinanderfolgende PN-Sequenzen umgesetzt werden (pseudo noise). Die aufeinanderfolgenden PN-Sequenzen werden anschließend - mit Halbsinus-Impulsformung - Offset-QPSK-moduliert (quarternary phase shift keying), spektral in einen der oben genannten 16 Kanäle verschoben und schließlich für die Übertragung verstärkt. Jeder Sende-/Empfangsvorrichtung wird hierbei ein anderer Kanal zugewiesen, so daß jeder Kanal zu jedem Zeitpunkt maximal durch eine Sende-/Empfangsvorrichtung belegt wird.

Die Empfangseinheit 16 jeder Sende-/Empfangsvorrichtung wandelt ein von ihrer Antenne 14 empfangenes und von der Sendeeinheit einer zweiten Sende-/Empfangsvorrichtung nach IEEE 802.15.4 erzeugtes Funksignal möglichst fehlerfrei in die gesendeten Daten um, indem das empfangene Funksignal unter anderem gefiltert, in das Basisband transformiert, demoduliert und die Daten detektiert (entschieden) werden. Ist ein kompletter Datenrahmen (PPDU) detektiert, so wird er zur weiteren Verarbeitung gemäß der MAC-Schicht an die Kontrolleinheit 17 übergeben.

Neben dem Nutzkanalanteil, d.h. dem von der zweiten Sende-/Empfangsvorrichtung im gewünschten Kanal übertragenen Sendesignal, kann das empfangene Signal Nachbarkanalanteile aufweisen, d.h. von dritten sende-/Empfangsvorrichtungen in spektral benachbarten Kanälen übertragene Sendesignale. Weist der Nutzkanal z.B. die Mittenfrequenz fCH=2440 MHz auf, so liegen die Mittenfrequenzen der relevantesten Nachbarkanäle aufgrund des Kanalrasters gemäß IEEE 802.15.4 bei fCH - 5 MHz = 2435 MHz ("linker" Nachbarkanal) und bei fCH + 5 MHz = 2445 MHz.

Umgekehrt kann das empfangene Signal aber auch Nachbarkanalanteile von dritten Sende-/Empfangsvorrichtungen, jedoch keinen Nutzkanalanteil der zweiten Sende-/Empfängsvorrichtung aufweisen. In diesem Falle ist es die Aufgabe der Empfangseinheit 16, den Nachbarkanal möglichst schnell als belegt zu erkennen und den Detektionsprozeß zu beenden, um für die Detektion von evtl. nachfolgenden Nutzkanaldaten frühstmöglich wieder zur Verfügung zu stehen.

Die sendeeinheit 15 und die Empfangseinheit 16 einer Sende-/Empfängsvorrichtung sind hierbei Teil einer (in Figur 1 nicht dargestellten) integrierten Schaltung, z.B. eines ASICs (application specific integrated circuit) oder eines ASSPs (application specific standard product), während die Kontrolleinheit 17 durch einen (ebenfalls nicht dargestellten) Mikrocontroller realisiert ist. Vorteilhaft weist die Sende-/Empfangsvorrichtung nur eine (z.B. als ASIC oder ASSP ausgeführte) integrierte Schaltung auf, die die Funktionen der Sendeeinheit 15, der Empfangseinheit 16 und der Kontrolleinheit 17 wahrnimmt.

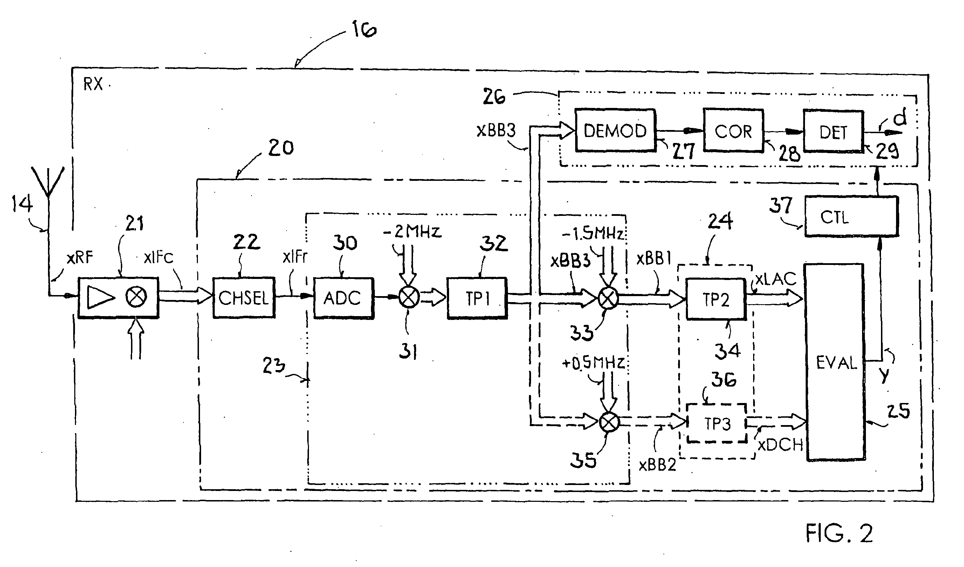

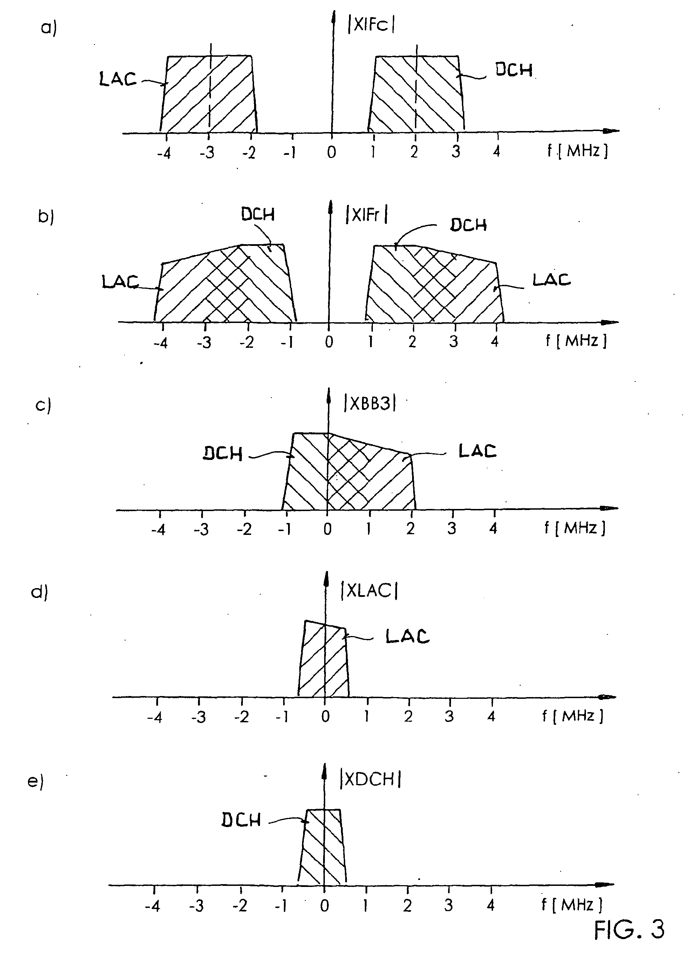

Figur 2 zeigt ein Blockschaltbild einer Empfangseinheit (RX) 16 mit einer erfindungsgemäßen Vorrichtung 20 zum Erkennen der Belegung eines Nachbarkanals mit einem Signal anhand eines komplexwertigen Bandpaßsignals. Figur 3 zeigt schematisch die Betragsspektren verschiedener Signale aus Figur 2.

Gemäß Figur 2 beinhaltet die Empfangseinheit 16 eine mit der Antenne 14 verbundene Mischereinheit 21, eine der Mischereinheit 21 nachgeschaltete Vorrichtung 20 zum Erkennen der Belegung eines Nachbarkanals mit einem Signal sowie eine mit der Vorrichtung 20 verbundene Datendetektionseinheit 26. Anhand des von der Mischereinheit 21 bereitgestellten komplexwertigen Bandpaßsignals XIFC generiert die Vorrichtung 20 ein binäres Belegungssignal y, das angibt, ob der Nachbarkanal mit einem Signal belegt ist. Komplexwertige Signale bzw. Leitungsverbindungen zur Übertragung von komplexwertigen Signalen sind in den Figuren durch Pfeile mit Doppellinien dargestellt.

Die Vorrichtung 20 weist folgende in Serie geschaltete Funktionsblöcke auf: eine analoge Filtereinheit (CHSEL) 22, eine Transformationseinheit 23, eine digitale Filtereinheit 24 und eine Auswerteeinheit (EVAL) 25, die das binäre Belegungssignal y erzeugt. Die analoge Filtereinheit 22 ist hierbei eingangsseitig mit der Mischereinheit 21 verbunden, während die Transformationseinheit 23 einen mit der Datendetektionseinheit 26 verbundenen Ausgang aufweist.

In einem ersten, bevorzugten Ausführungsbeispiel weist die Transformationseinheit 23 folgende in Reihe geschaltete Funktionsblöcke auf: einen Analog/Digital-Wandler (ADC) 30, einen ersten Mischer 31, ein erstes Tiefpaßfilter (TP1) 32 und einen zweiten Mischer 33. Der Analog/Digital-Wandler 30 ist hierbei eingangsseitig mit der analogen Filtereinheit 22 verbunden, während der zweite Mischer 33 ausgangsseitig mit der digitalen Filtereinheit 24 verbunden ist. Das erste Tiefpaßfilter 32 ist weiterhin ausgangsseitig mit der Datendetektionseinheit 26 verbunden.

Die digitale Filtereinheit 24 beinhaltet gemäß dem ersten Ausführungsbeispiel ein zweites Tiefpaßfilter (TP2) 34, das eingangsseitig mit dem zweiten Mischer 33 der Transformationseinheit 23 und ausgangsseitig mit der Auswerteeinheit 25 verbunden ist.

In einem zweiten Ausführungsbeispiel weist die Transformationseinheit 23 zusätzlich einen dritten Mischer 35 und die digitale Filtereinheit 24 zusätzlich ein drittes Tiefpaßfilter (TP3) 36 auf. Hierbei ist der dritte Mischer 35 eingangsseitig mit dem ersten Tiefpaßfilter 32 und ausgangsseitig mit dem dritten Tiefpaßfilter 36 verbunden, das ausgangsseitig mit der Auswerteeinheit 25 verbunden ist.

In beiden Ausführungsbeispielen weist die Datendetektionseinheit 26, die zum Detektieren der im komplexwertigen Bandpaßsignal xlFc enthaltenen Datenwerte ausgebildet ist, eine eingangsseitig mit dem ersten Tiefpaßfilter 32 der Transformationseinheit 23 verbundene Demodulationseinheit 27, eine nachgeschaltete Korrelationseinheit 28 und eine der Korrelationseinheit 28 nachgeschaltete Detektionseinheit 29 auf.

Das von der Antenne 14 empfangene reellwertige Funksignal XRF, das - wie oben mit Bezug auf Figur 1 beschrieben - einen Nutzkanalanteil und/öder einen oder mehrere spektral beabstandete Nachbarkanalanteile aufweisen kann, wird in der Mischereinheit 21 zunächst mittels eines rauscharmen Verstärkers (LNA) verstärkt und durch ein Polyphasenfilter in eine Inphasenkomponente (I) und eine Quadraturphasenkomponente (Q) zerlegt. Das so gebildete komplexwertige Empfangssignal (mit Realteil I und Imaginärteil Q) wird anschließend mit Hilfe von zwei Mischern in einen Zwischenfrequenzbereich umgesetzt und so das zwischenfrequenzsignal xlFc gebildet (IF, intermediate frequency). Beim Zwischenfrequenzsignal xIfc handelt es sich um ein komplexwertiges Bandpaßsignal. Das Betragsspektrum |xIFc| des Zwischenfrequenzsignals XIFc ist in Figur 3a schematisch dargestellt. Aus Figur 3a ist zu ersehen, daß infolge der Umsetzung in den Zwischenfrequenzbereich die Mittenfrequenz des Nutzkanalanteils (desired channel, DCH) bei der Zwischenfrequenz fIF=2MHz und die Mittenfrequenz des im Spektrum nächstliegenden linken Nachbarkanalanteils (left adjacent channel, LAC) bei fIF - 5MHz = -3 MHz liegt. Zur Vereinfachung der Darstellung wird in Figur 3a davon ausgegangen, daß die mittlere Leistung von DCH- und LAC-Anteil übereinstimmen. Aufgrund des relativ niedrigen Wertes der Zwischenfrequenz fIF von 2MHz wird die in Figur 2 dargestellte Empfangseinheit 16 als "low IF"-Empfangseinheit bezeichnet.

Die analoge Filtereinheit 22, die als Kanalselektionsfilter (CHSEL) fungiert, leitet ein reellwertiges Bandpaßsignal xIFr ab, indem das komplexwertige Bandpaßsignal xIFc mit Hilfe eines (komplexen) Butterworth-Filters dritter Ordnung gefiltert und nur der Realteil des gefilterten Signals gebildet wird. Hierdurch ist die analoge Filtereinheit 22 einfach zu realisieren und energiesparend zu betreiben vorzugsweise werden die Werte des Realteils des gefilterten Signals anschließend in der Filtereinheit 22 mit Hilfe eines sog. Limiter-Verstärkers verstärkt und derart auf einen Maximalwert begrenzt, daß die Realteilwerte den Maximalwert betragsmäßig nicht übersteigen.

Da nur der Realteil des gefilterten Signals gebildet und weiterverarbeitet wird, wird die in Figur 2 dargestellte Empfangseinheit 16 als "reellwertige low IF"-Empfangseinheit bezeichnet. Durch die Realteilbildung vereinfacht sich der Aufbau der nachfolgenden Funktionsblöcke und damit der gesamten Empfangseinheit wesentlich. So wird vorteilhaft insbesondere nur ein Analog-Digital-Wandler für die nachfolgende Signalverarbeitung benötigt.

In Figur 3b ist das Betragsspektrum |XIFr| des reellwertigen Bandpaßsignals xIFr schematisch dargestellt. Durch die Realteilbildung überlappt der durch den linken Nachbarkanal (LAC) verursachte Nachbarkanalanteil spektral den Nutzkanalanteil (DCH), wie anhand derjenigen Bereiche in Figur 3b zu erkennen ist, die beide Schraffuren aufweisen.

Die Transformationseinheit 23 überführt das reellwertige Bandpaßsignal xlFr in ein erstes und ein drittes Basisbandsignal xBB1 bzw. xBB3 sowie optional zusätzlich in ein zweites Basisbandsignal xBB2, wobei alle drei Basisbandsignale komplexwertig und digital sind. Zunächst wird das reellwertige Bandpaßsignal xIFr durch den Analog/Digital-Wandler 30 mit einer Abtastrate von vorzugsweise 16 Msps (megasamples per second) abgetastet und mit einer Bitbreite von vorzugsweise nur einem Bit quantisiert. Das resultierende reellwertige digitale IF-Signal wird anschließend mit Hilfe des ersten Mischers 31 in das Basisband verschoben und durch das (komplexe) erste Tiefpaßfilter (TP1) 32 mit einer Bandbreite von 2 MHz tiefpaßgefiltert. Das auf diese Weise gebildete dritte Basisbandsignal XBB3 weist wiederum einen Nutzkanalanteil (DCH) und/oder einen Nachbarkanalanteil (LAC) auf, wie aus der schematischen Darstellung seines Betragsspektrums 1 X8B3 in Figur 3c zu erkennen ist.

Das dritte Basisbandsignal xBB3 wird sowohl der Demodulationseinheit 27 in der Datendetektionseinheit 26 als auch dem zweiten Mischer 33 zugeführt. In der Datendetektionseinheit 26 werden die im Nutzkanalanteil des dritten Basisbandsignals xBB3 enthaltenen Daten mit Hilfe der Demodulationseinheit 27, der Korrelationseinheit (PN-Despreader) 28 und der Detektionseinheit 29 möglichst fehlerfrei detektiert. Der zweite Mischer 33 verschiebt das dritte Basisbandsignal xBB3 spektral um 1,5 MHz nach links. Das so erhaltene erste Basisbandsignal xBB1 wird dem (komplexen) zweiten Tiefpaßfilter (TP2) 34 der digitalen Filtereinheit 24 zugeführt.

Das zweite Tiefpaßfilter (TP2) 34 der digitalen Filtereinheit 24 filtert das erste Basisbandsignal XBB1 derart, daß vom Nutzkanalanteil (DCH) beeinflußte Spektralanteile unterdrückt werden, und stellt ein komplexwertiges erstes gefiltertes Signal XLAC bereit. Das Betragsspektrum |XLAC| des ersten gefilterten Signals xLAC ist schematisch in Figur 3d dargestellt. Es ist zu erkennen, daß dieses Signal ausschließlich den Nachbarkanalanteil (LAC) aufweist. Vorzugsweise besteht das zweite Tiefpaßfilter 34 aus einer Serienschaltung eines ersten komplexen FIR-Filters (finite impulse response), eines Abtastratenreduzierers um den Faktor zwei sowie eines zweiten komplexen FIR-Filters, so daß sich insgesamt ein einfach aufgebautes Tiefpaßfilter mit einer Bandbreite von ca. 0,5 MHz ergibt.

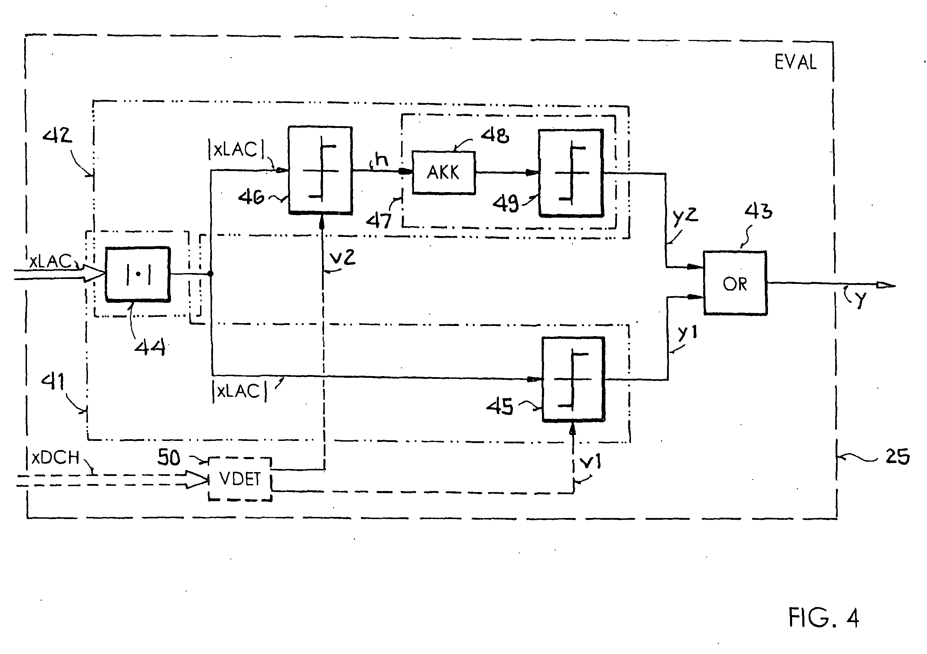

Die Auswerteeinheit 25 wertet das erste gefilterte Signal XLAC aus und erzeugt ein binäres Belegungssignal y zur Angabe der Belegung des Nachbarkanals in Abhängigkeit vom ausgewerteten ersten gefilterten Signal. Eine solche Auswerteeinheit ist nachstehend mit Bezug auf Figur 4 beschrieben.

Gemäß Figur 2 weist die Vorrichtung 20 weiterhin eine mit der Auswerteeinheit 25 und der Datendetektionseinheit 26 verbundene Steuereinheit (CTL) 37 auf, der das binäre Belegungssignal y zugeführt wird. Die Steuereinheit 37 steuert in Abhängigkeit vom binären Belegungssignal y die Datendetektionseinheit 26 derart, daß der aktuelle Detektionsprozeß abgebrochen bzw. der Empfangsmodus verlassen wird, sobald das binäre Belegungssignal y die Belegung des Nachbarkanals angibt (signalisiert), und in einen "Listen Mode" gewechselt wird, in dem die Empfangseinheit 16 den Kanal erneut auf das Vorliegen eines IEEE 802.15.4-Signals überprüft. Hierzu ist die Steuereinheit 37 vorzugsweise mit der Datendetektionseinheit 26 verbunden, die den aktuellen Empfangsprozeß unmittelbar beendet, d.h. die Daten des aktuell empfangenen Rahmens verwirft, falls sie von der Steuereinheit 37 dazu angewiesen wird. Damit unterbleibt die Übertragung des LAC-Rahmens von der Empfangseinheit 16 an die Kontrolleinheit 17, was einerseits einen energiesparenderen Betrieb der Sende-/Empfangsvorrichtung ermöglicht und andererseits bewirkt, daß die Empfangseinheit 16 zu einem früheren Zeitpunkt wieder bereit ist, einen Datenrahmen im Nutzkanal (DCH) zu empfangen.

Gemäß des zweiten Ausführungsbeispiels generiert die Transformationseinheit 23 zusätzlich ein zweites Basisbandsignal xBB2, indem das dritte Basisbandsignal xBB3 mit Hilfe des dritten Mischers 35 spektral um 0,5 MHz nach rechts verschoben wird. Das (komplexe) dritte Tiefpaßfilter 36 der digitalen Filtereinheit 24, das vorzugsweise analog zum zweiten Tiefpaßfilter 34 realisiert ist, filtert das zweite Basisbandsignal xBB2 derart, daß vom linken Nachbarkanal (LAC) beeinflußte Spektralanteile unterdrückt werden, und stellt ein komplexwertiges zweites gefiltertes Signal xDCH bereit. Das Betragsspektrum |XDCH| des zweiten gefilterten Signals xDCH ist schematisch in Figur 3e dargestellt. Es ist zu erkennen, daß dieses Signal ausschließlich den Nutzkanalanteil (DCH) aufweist. Die Auswerteeinheit 25 wertet im zweiten Ausführungsbeispiel sowohl das erste gefilterte Signal xLAC als auch das zweite gefilterte Signal xDCH aus und erzeugt ein binäres Belegungssignal y zur Angabe der Belegung des Nachbarkanals in Abhängigkeit von beiden ausgewerteten Signalen. Eine solche Auswerteeinheit ist ebenfalls nachstehend mit Bezug auf Figur 4 beschrieben.

Figur 4 zeigt ein Blockschaltbild der Auswerteeinheit (EVAL) 25 aus Figur 2. Gemäß des ersten Ausführungsbeispiels weist die Auswerteeinheit 25 eine erste Auswerteeinheit 41, eine zweite Auswerteeinheit 42 und ein ODER-Gatter 43 auf. Die beiden Auswerteeinheiten 41 und 42 sind eingangsseitig mit dem zweiten Tiefpaßfilter (TP2) 34 aus Figur 2 und ausgangsseitig mit zwei Eingängen des ODER-Gatters 43 verbunden. Am Ausgang des ODER-Gatters 43, der dem Ausgang der Auswerteeinheit 25 entspricht, wird das binäre Belegungssignal y abgegriffen.

Die erste Auswerteeinheit 41 generiert ein erstes binäres Signal y1, indem die Werte des ersten gefilterten Signals xLAC einzeln ausgewertet werden, d.h. für jeden Wert des ersten binären Signals y1 wird genau ein wert (nämlich der aktuelle Wert) des ersten gefilterten Signals xLAC ausgewertet, so daß eine Momentanwertauswertung erfolgt. Die zweite Auswerteeinheit 42 erzeugt ein zweites binäres Signal y2, indem die Werte des ersten gefilterten Signals xLAC mittels einer gleitenden Fensterung ausgewertet werden, d.h. für jeden Wert des zweiten binären Signals y2 werden mehrere Werte (nämlich der aktuelle sowie vergangene Werte) des ersten gefilterten Signals xLAC ausgewertet, so daß eine gedächtnisbehaftete Auswertung erfolgt. Das ODER-Gatter 43 generiert schließlich das binäre Belegungssignal y, indem das erste binäre Signal y1 mit dem zweiten binären Signal y2 ODER-verknüpft wird.

Die erste Auswerteeinheit 41 beinhaltet eine eingangsseitig mit dem zweiten Tiefpaßfilter (TP2) 34 aus Figur 2 verbundene Betragsbildungseinheit 44 und eine nachgeschaltete erste Entscheidereinheit 45, die ausgangsseitig mit einem ersten Eingang des ODER-Gatters 43 verbunden ist. Zunächst werden in der Betragsbildungseinheit 44 die Beträge |xLAC| der Werte des ersten gefilterten Signals xLAC gebildet. In der ersten Entscheidereinheit 45 werden die Beträge |xLAC| anschließend mit einem ersten Vergleichswert V1 verglichen und das erste binäre Signal y1 derart erzeugt, daß es einen Wert von logisch 1 annimmt, falls der entsprechende Wert des ersten gefilterten Signals xLAC den ersten Vergleichswert V1 betragsmäßig übersteigt bzw. einen Wert von logisch 0, falls dies nicht der Fall ist. In einer bevorzugten Ausführungsform handelt es sich beim vergleichswert V1 um einen Schwellwert, der vorteilhaft auf einen Wert im Bereich von ca. 75-95% des maximal möglichen Betrags der Werte des ersten gefilterten Signals xLAC festgelegt wird.

Die zweite Auswerteeinheit 42 weist folgende in Reihe geschaltete Funktionsblöcke auf: die Betragsbildungseinheit 44, eine zweite Entscheidereinheit 46 und eine Medianbestimmungseinheit 47 bestehend aus einem Fensterakkumulator 48 mit nachgeschalteter dritter Entscheidereinheit 49, wobei die Medianbestimmungseinheit 47 bzw. die dritte Entscheidereinheit 49 ausgangsseitig mit einem zweiten Eingang des ODER-Gatters 43 verbunden ist.

In der zweiten Entscheidereinheit 46 werden die in der Betragsbildungseinheit 44 gebildeten Beträge |xLAC| der Werte des ersten gefilterten Signals mit einem zweiten Vergleichswert V2 verglichen und ein binäres Hilfssignal h derart erzeugt, daß es einen Wert von logisch 1 annimmt, falls der entsprechende Wert des ersten gefilterten Signals xLAC den zweiten Vergleichswert V2 betragsmäßig übersteigt bzw. einen Wert von logisch 0 annimmt, falls dies nicht der Fall ist. In einer bevorzugten Ausführungsform handelt es sich beim Vergleichswert V2 um einen Schwellwert, der vorteilhaft im wesentlichen auf den Mittelwert aus dem minimal und dem maximal möglichen Betrag der Werte des ersten gefilterten Signals xLAC festgelegt wird.

Die Medianbestimmungseinheit 47 erzeugt das zweite binäre Signal y2 derart, daß jeder Wert des zweiten binären Signals y2 einen Median von N Werten des binären Hilfssignals h angibt, wobei N die Fensterlänge bezeichnet. Hierzu akkumuliert der Fensterakkumulator 48 gleitend jeweils N Werte des binären Hilfssignals h, damit in der dritten Entscheidereinheit 49 das zweite binäre Signal y2 derart erzeugt werden kann, daß es einen Wert von logisch 1 annimmt, falls der entsprechende akkumulierte Wert einen wert von im wesentlichen N/2 übersteigt bzw. einen Wert von logisch 0 annimmt, falls dies nicht der Fall ist. Vorzugsweise wird die Fensterlänge zu N = 16 gewählt.

Anstelle des Fensterakkumulators 48 kann alternativ eine Mittelwertbestimmungseinheit vorgesehen werden, die die Werte des binären Hilfssignals h (ggf. gewichtet oder im Sinne eines RMS-Mittelwertes) gleitend mittelt, um das Eingangssignal der dritten Entscheidereinheit 49 zu erzeugen. Auch kann eine aufwendigere nichtbinäre Mittelwertbestimmungseinheit vorgesehen werden, die direkt die Beträge |xLAC| der Werte des ersten gefilterten Signals mittelt, um das Eingangssignal der dritten Entscheidereinheit 49 zu erzeugen.

Gemäß des zweiten Ausführungsbeispiels wertet die Auswerteeinheit 25 sowohl das erste gefilterte Signal xLAC als auch das an einem zweiten Eingang anliegende zweite gefilterte Signal xDCH aus und erzeugt das binäre Belegungssignal y in Abhängigkeit von beiden ausgewerteten Signalen. Vorzugsweise beinhaltet die Auswerteeinheit 25 zu diesem Zweck zusätzlich eine Vergleichswertbestimmungseinheit (VDET) 50, die eingangsseitig mit dem dritten Tiefpaßfilter 36 und ausgangsseitig mit der ersten Entscheidereinheit 45 und der zweiten Entscheidereinheit 46 verbunden ist und auf der Basis des zweiten gefilterten Signals xDCH von diesem Signal abhängige Vergleichswerte V1 und V2 bestimmt. Zur Bestimmung des Vergleichswertes V2 wird das zweite gefilterte Signal xDCH beispielsweise betragsmäßig gemittelt (ungewichtete/gewichtete Mittelung, RMS-Mittelung, Medianbestimmung etc.), während zur Bestimmung des Vergleichswertes V1 zum Beispiel nur das betragsmäßig größte Drittel der Werte von xDCH betragsmäßig gemittelt wird.

Obgleich die vorliegende Erfindung vorstehend anhand von Ausführungsbeispielen beschrieben wurde, ist sie nicht darauf beschränkt, sondern auf vielfältige Weise modifizierbar. So ist die Erfindung beispielsweise weder auf WPANs an sich, noch auf WPANs gemäß IEEE 802.15.4 bzw. die dort spezifizierten Bandspreizverfahren, Modulationsverfahren, Frequenzbänder, Bit-, Symbol- und Chipraten und -stufigkeiten etc., noch auf die angegebenen Werte der Zwischenfrequenz, der Abtastfrequenz, Filterbandbreiten, -typen und -ordnungen etc. beschränkt. Die Erfindung kann vielmehr in unterschiedlichsten drahtlosen oder -gebundenen FDMA-Kommunikationssystemen vorteilhaft eingesetzt werden.

### Bezugszeichenliste

- 10: Datenübertragungssystem / "Wireless Personal Area Network" (WPAN) nach dem IEEE-Standard 802.15.4
- 11-13: Sende-/Empfangsvorrichtung (transceiver, TRX)
- 14: Antenne
- 15: sendeeinheit (transmitter, TX)
- 16: Empfangseinheit (receiver, RX)
- 17: Kontrolleinheit (CTRL)
- 20: Vorrichtung zum Erkennen der Belegung eines Nachbarkanals
- 21: Mischereinheit
- 22: analoge Filtereinheit (CHSEL)
- 23: Transformationseinheit
- 24: digitale Filtereinheit
- 25: Auswerteeinheit (EVAL)
- 26: Datendetektionseinheit
- 27: Demodulationseinheit (DEMOD)
- 28: Korrelationseinheit (COR)
- 29: Detektionseinheit (DET)
- 30: Analog-/Digital-Wandler (ADC)
- 31: erster Mischer
- 32: erstes Tiefpaßfilter (TP1)
- 33: zweiter Mischer
- 34: zweites Tiefpaßfilter (TP2)
- 35: dritter Mischer
- 36: drittes Tiefpaßfilter (TP3)
- 37: Steuereinheit (CTL)
- 41, 42: erste bzw. zweite Auswerteeinheit
- 43: ODER-Gatter
- 44: Betragsbildungseinheit
- 45, 46: erste bzw. zweite Entscheidereinheit
- 47: Medianbestimmungseinheit
- 48: Fensterakkumulator
- 49: dritte Entscheidereinheit
- 50: Vergleichswertbestimmungseinheit
- ADC: Analog-/Digital-Wandler
- AKK: Akkumulator
- BB: Basisband
- BP: Bandpaßfilter
- CHSEL: Kanalselektionsfilter
- COR: Korrelationseinheit, Despreader
- CTL: Steuereinheit
- CTRL: Kontrolleinheit
- DEMOD: Demodulator
- DET: Detektor
- EVAL: Auswerteeinheit
- FDMA: frequency division multiple access (Frequenzmultiplex-Zugriffsverfahren)
- FIR: finite impulse response
- IF: intermediate frequency (Zwischenfrequenz)
- ISM: industrial, scientific, medical (Frequenzband bei 2,4 GHz)
- LAC: left adjacent channel
- LNA: low noise amplifier
- MAC: medium access control
- MPDU: MAC protocol data unit
- MSDU: MAC service data unit (data payload)
- OR: ODER-Gatter
- PN: pseudo-noise
- PPDU: physical protocol data unit (Datenrahmen)
- QPSK: quarternary phase shift keying
- RF: Funkfrequenz
- RMS: root mean square
- RX: Empfangseinheit
- TP: Tiefpaßfilter
- TRX: Sende-/Empfangsvorrichtung, transceiver
- TX: Sendeeinheit
- VDET: Vergleichswertbestimmungseinheit
- WPAN: Wireless Personal Area Network
- |x|: (Absolut)Betrag der Größe x
- fC: Chiptakt (=1/TC)
- fCH: Mittenfrequenz eines Kanals
- fIF: Zwischenfrequenz
- fRF: Funkfrequenz
- h: binäres Hilfssignal
- N: Fensterlänge
- TC: Chipperiode (=1/fC)
- V1, V2: erster bzw. zweiter Vergleichswert
- xBB1, xBB2: erstes bzw. zweites Basisbandsignal
- xBB3: drittes Basisbandsignal
- xBB3: Spektrum des Signals xBB3
- xDCH: zweites gefiltertes Signal
- xDCH: Spektrum des Signals XDCH
- xIFC: komplexwertiges Bandpaß-/Zwischenfrequenzsignal
- xIFc: Spektrum des Signals xIFc
- xIFr: reellwertiges Bandpaß-/Zwischenfrequenzsignal
- xIFr: Spektrum des Signals xIFr
- xLAC: erstes gefiltertes Signal
- xLAC: Spektrum des Signals xLAC
- xRF: Funksignal
- y: binäres Belegungssignal
- y1, y2: erstes bzw. zweites binäres Signal

## Patentansprüche

1. Verfahren zum Erkennen der Belegung eines Nachbarkanals mit einem Signal anhand eines komplexwertigen Bandpaßsignals (xIFC), das einen Nutzkanalanteil und/oder einen Nachbarkanalanteil aufweist, mit den Schritten:
a) Ableiten eines reellwertigen Bandpaßsignals (xIFr), indem das komplexwertige Bandpaßsignal (xIFc) gefiltert und vom gefilterten Signal der Realteil gebildet wird,
b) Überführen des reellwertigen Bandpaßsignals (xIFr) in ein erstes Basisbandsignal (xBB1),
c) Filtern des ersten Basisbandsignals (xBB1), so daß vom Nutzkanalanteil beeinflußte Spektralanteile unterdrückt werden, und bereitstellen eines ersten gefilterten Signals (xLAC),
d) Auswerten des ersten gefilterten Signals (xLAC) und Erzeugen eines binären Belegungssignals (y) zur Angabe der Belegung des Nachbarkanals in Abhängigkeit vom ausgewerteten ersten gefilterten Signal.

2. Verfahren nach Anspruch 1, **dadurch gekennzeichnet, daß** das Auswerten des ersten gefilterten Signals (xLAC) eine Medianbestimmung von Werten eines binären Signals beinhaltet, das vom ersten gefilterten Signal (xLAC) abhängt.

3. Verfahren nach Anspruch 1 oder 2, **dadurch gekennzeichnet, daß** das Auswerten des ersten gefilterten Signals (xLAC) eine Mittelwertbestimmung von Werten eines Signals beinhaltet, das vom ersten gefilterten Signal abhängt.

4. Verfahren nach einem der Ansprüche 1 bis 3, **dadurch gekennzeichnet, daß** das Auswerten des ersten gefilterten Signals (xLAC) folgende Schritte beinhaltet:
a) Erzeugen eines ersten binären Signals (y1), indem die werte des ersten gefilterten Signals (xLAC) einzeln ausgewertet werden,
b) Erzeugen eines zweiten binären Signals (y2), indem die Werte des ersten gefilterten Signals (xLAC) mittels einer gleitenden Fensterung ausgewertet werden,
c) Erzeugen des binären Belegungssignals (y) durch logisches ODER-Verknüpfen des ersten binären Signals (y1) mit dem zweiten binären Signal (y2).

5. Verfahren nach Anspruch 4, **dadurch gekennzeichnet, daß** die Werte des ersten gefilterten Signals (xLAC) einzeln ausgewertet werden, indem sie betragsmäßig mit einem ersten Vergleichswert (V1) verglichen werden und das erste binäre Signal (y1) einen Wert von logisch 1 annimmt, falls der entsprechende Wert des ersten gefilterten Signals (xLAC) den ersten Vergleichswert (V1) betragsmäßig übersteigt bzw. einen Wert von logisch 0 annimmt, falls dies nicht der Fall ist.

6. Verfahren nach Anspruch 5, **dadurch gekennzeichnet, daß** der erste Vergleichswert (V1) ein Schwellwert ist.

7. Verfahren nach einem der Ansprüche 4 bis 6, **dadurch gekennzeichnet, daß** jeder Wert des zweiten binären Signals (y2) einen Median von N Werten eines binären Hilfssignals (h) angibt, wobei N die Fensterlänge bezeichnet und das binäre Hilfssignal (h) vom ersten gefilterten Signal (xLAC) abhängt.

8. Verfahren nach Anspruch 7, **dadurch gekennzeichnet, daß** die Werte des ersten gefilterten Signals (xLAC) betragsmäßig mit einem zweiten Vergleichswert (V2) verglichen werden und das binäre Hilfssignal (h) einen Wert von logisch 1 annimmt, falls der entsprechende Wert des ersten gefilterten Signals (xLAC) den zweiten Vergleichswert (V2) betragsmäßig übersteigt, und einen Wert von logisch 0, falls dies nicht der Fall ist.

9. Verfahren nach Anspruch 8, **dadurch gekennzeichnet, daß** der zweite Vergleichswert (V2) ein Schwellwert ist

10. Verfahren nach einem der vorhergehenden Ansprüche, mit den schritten:
a) Überführen des reellwertigen Bandpaßsignals (xIFr) in ein zweites Basisbandsignal (xBB2),
b) Filtern des zweiten Basisbandsignals (xBB2), so daß vom Nachbarkanalanteil beeinflußte Spektralanteile unterdrückt werden, und bereitstellen eines zweiten gefilterten Signals (xDCH),
c) Auswerten des zweiten gefilterten Signals (xDCH) und Erzeugen des binären Belegungssignals (y) in Abhängigkeit vom ausgewerteten ersten gefilterten Signal und vom ausgewerteten zweiten gefilterten Signal.

11. Verfahren nach Anspruch 10, rückbezogen auf Anspruch 5, wobei der erste Vergleichswert (V1) vom zweiten gefilterten Signal (xDCH) abhängt.

12. Verfahren nach Anspruch 10, rückbezogen auf Anspruch 8, wobei der zweite Vergleichswert (V2) vom zweiten gefilterten Signal (xDCH) abhängt.

13. Verfahren nach einem der vorhergehenden Ansprüche, mit den Schritten:
a) Detektieren der im komplexwertigen Bandpaßsignal (xIFc) enthaltenen Datenwerte (d),
b) Abbrechen des Detektionsschrittes, sobald das binäre Belegungssignal (y) die Belegung des Nachbarkanals signalisiert.

14. Vorrichtung (20) zum Erkennen der Belegung eines Nachbarkanals mit einem Signal anhand eines komplexwertigen Bandpaßsignals (xIFc), das einen Nutzkanalanteil und/oder einen Nachbarkanalanteil aufweist, enthaltend:
a) eine analoge Filtereinheit (22), die ausgebildet ist, ein reellwertiges Bandpaßsignal (xIFr) abzuleiten, indem das komplexwertige Bandpaßsignal (xIFC) gefiltert und vom gefilterten Signal der Realteil gebildet wird;
b) eine mit der analogen Filtereinheit (22) verbundene Transformationseinheit (23), die ausgebildet ist, das reellwertige Bandpaßsignal (xIFr) in ein erstes Basisbandsignal (xBB1) zu überführen,
c) eine mit der Transformationseinheit (23) verbundene digitale Filtereinheit (24), die ausgebildet ist, das erste Basisbandsignal (xBB1) derart zu filtern, daß vom Nutzkanalanteil beeinflußte Spektralanteile unterdrückt werden, und ein erstes gefiltertes Signal (xLAC) bereitzustellen,
d) eine mit der digitalen Filtereinheit (24) verbundene Auswerteeinheit (25), die ausgebildet ist, das erste gefilterte Signal (xLAC) auszuwerten und ein binäres Belegungssignals (y) zur Angabe der Belegung des Nachbarkanals in Abhängigkeit vom ausgewerteten ersten gefilterten Signal zu erzeugen.

15. Vorrichtung nach Anspruch 14, **dadurch gekennzeichnet, daß** die Auswerteeinheit (25) eine Medianbestimmungseinheit (47) aufweist, die ausgebildet ist, eine Medianbestimmung von Werten eines binären Signals auszuführen, das vom ersten gefilterten Signal (xLAC) abhängt.

16. Vorrichtung nach Anspruch 14 oder 15, **dadurch gekennzeichnet, daß** die Auswerteeinheit (25) eine Mittelwertbestimmungseinheit aufweist, die ausgebildet ist, eine Mittelwertbestimmung von werten eines Signals auszuführen, das vom ersten gefilterten Signal (xLAC) abhängt.

17. Vorrichtung nach einem der Ansprüche 14 bis 16, **dadurch gekennzeichnet, daß** die Auswerteeinheit (25) folgende Einheiten aufweist:
a) eine mit der digitalen Filtereinheit (24) verbundene erste Auswerteeinheit (41), die ausgebildet ist, ein erstes binäres Signal (y1) zu erzeugen, indem die Werte des ersten gefilterten Signals (xLAC) einzeln ausgewertet werden,
b) eine mit der digitalen Filtereinheit (24) verbundene zweite Auswerteeinheit (42), die ausgebildet ist, ein zweites binäres Signal (y2) zu erzeugen, indem die Werte des ersten gefilterten Signals (xLAC) mittels einer gleitenden Fensterung ausgewertet werden,
c) ein mit der ersten Auswerteeinheit (41) und der zweiten Auswerteeinheit (42) verbundenes ODER-Gatter (43), das zum Erzeugen des binären Belegungssignals (y) durch logisches ODER-Verknüpfen des ersten binären Signals (y1) mit dem zweiten binären Signal (y2) ausgebildet ist.

18. Vorrichtung nach Anspruch 17, **dadurch gekennzeichnet, daß** die erste Auswerteeinheit (41) folgende Einheiten aufweist:
a) eine mit der digitalen Filtereinheit (24) verbundene Betragsbildungseinheit (44), die zum Bilden der Beträge (|xLAC|) der Werte des ersten gefilterten Signals (XLAC) ausgebildet ist,
b) eine mit der Betragsbildungseinheit (44) verbundene erste Entscheidereinheit (45), die ausgebildet ist, die Beträge (|xLAC|) der Werte des ersten gefilterten Signals mit einem ersten Vergleichswert (V1) zu vergleichen und das erste binäre Signal (y1) derart zu erzeugen, daß es einen wert von logisch 1 annimmt, falls der entsprechende Wert des ersten gefilterten Signals (xLAC) den ersten Vergleichswert (V1) betragsmäßig übersteigt bzw. einen Wert von logisch 0 annimmt, falls dies nicht der Fall ist.

19. Vorrichtung nach Anspruch 17 oder 18, **dadurch gekennzeichnet, daß** die zweite Auswerteeinheit (42) eine Medianbestimmungseinheit (47) aufweist, die ausgebildet ist, das zweite binäre Signal (y2) derart zu erzeugen, daß jeder Wert des zweiten binären Signals (y2) einen Median von N Werten eines binären Hilfssignals (h) angibt, wobei N die Fensterlänge bezeichnet und das binäre Hilfssignal (h) vom ersten gefilterten Signal (XLAC) abhängt.

20. Vorrichtung nach Anspruch 19, **dadurch gekennzeichnet, daß** die zweite Auswerteeinheit (42) folgende Einheiten aufweist:
a) eine mit der digitalen Filtereinheit (24) verbundene Betragsbildungseinheit (44), die zum Bilden der Beträge (|xLAC|) der Werte des ersten gefilterten Signals (xLAC) ausgebildet ist,
b) eine mit der Betragsbildungseinheit (44) verbundene zweite Entscheidereinheit (46), die ausgebildet ist, die Beträge (|xLAC|) der Werte des ersten gefilterten Signals mit einem zweiten Vergleichswert (V2) zu vergleichen und das binäre Hilfssignal (h) derart zu erzeugen, daß es einen wert von logisch 1 annimmt, falls der entsprechende Wert des ersten gefilterten Signals (xLAC) den zweiten Vergleichswert (V2) betragsmäßig übersteigt bzw. einen Wert von logisch 0 annimmt, falls dies nicht der Fall ist,
c) einen mit der zweiten Entscheidereinheit (46) verbundenen Fensterakkumulator (48), der zum gleitenden Akkumulieren von jeweils N Werten des binären Hilfssignals (h) ausgebildet ist,
d) eine mit dem Fensterakkumulator (48) verbundene dritte Entscheidereinheit (49), die ausgebildet ist, das zweite binäre Signal (y2) derart zu erzeugen, daß es einen Wert von logisch 1 annimmt, falls der entsprechende akkumulierte Wert einen Wert von im wesentlichen N/2 übersteigt bzw. einen Wert von logisch O annimmt, falls dies nicht der Fall ist.

21. Vorrichtung nach einem der Ansprüche 14 bis 20, **dadurch gekennzeichnet, daß**
a) die Transformationseinheit (23) ausgebildet ist, das reellwertige Bandpaßsignal (xIFr) in ein zweites Basisbandsignal (xBB2) zu überführen,
b) die digitale Filtereinheit (24) ausgebildet ist, das zweite Basisbandsignal (xBB2) derart zu filtern, daß vom Nachbarkanalanteil beeinflußte Spektralanteile unterdrückt werden, und ein zweites gefiltertes Signal (xDCH) bereitzustellen,
c) die Auswerteeinheit (25) ausgebildet ist, das zweite gefilterte Signal (xDCH) auszuwerten und das binäre Belegungssignal (y) in Abhängigkeit vom ausgewerteten ersten gefilterten Signal und vom ausgewerteten zweiten gefilterten Signal zu erzeugen.

22. Vorrichtung nach Anspruch 21, rückbezogen auf Anspruch 18, wobei die Auswerteeinheit (25) ausgebildet ist, einen vom zweiten gefilterten Signal (xDCH) abhängigen ersten Vergleichswert (V1) vorzusehen.

23. Vorrichtung nach Anspruch 21, rückbezogen auf Anspruch 20, wobei die Auswerteeinheit (25) ausgebildet ist, einen vom zweiten gefilterten Signal (xDCH) abhängigen zweiten Vergleichswert (V2) vorzusehen.

24. Vorrichtung nach einem der Ansprüche 14 bis 23, enthaltend
a) eine mit der Auswerteeinheit (25) verbundene Steuereinheit (37) zum Steuern einer Datendetektionseinheit (26), die zum Detektieren der im komplexwertigen Bandpaßsignal (xIFc) enthaltenen Datenwerte (d) ausgebildet ist,
b) wobei die Steuereinheit (37) ausgebildet ist, die Datendetektionseinheit (26) anzuweisen, den aktuellen Detektionsprozeß abzubrechen, wenn das binäre Belegungssignal (y) die Belegung des Nachbarkanals signalisiert.

25. Sende-/Empfangsvorrichtung (11-13), insbesondere für ein Datenübertragungssystem (10) nach dem IEEE-Standard 802.15.4 im 2.4 GHz-Band, enthaltend eine Antenne (14) sowie eine mit der Antenne verbundene Empfangseinheit (16) zum Empfangen von Daten insbesondere nach IEEE 802.15.4, mit einer Vorrichtung (20) zum Erkennen der Belegung eines Nachbarkanals nach einem der Ansprüche 14 bis 24.

26. Integrierte Schaltung, insbesondere für eine Sende-/Empfangsvorrichtung nach Anspruch 25, mit einer Vorrichtung (20) nach einem der Ansprüche 14 bis 24.

## Claims

1. Method of recognising the occupancy of an adjacent channel with a signal based on a complex significance bandpass signal (xIFc), which comprises a traffic channel component and/or an adjacent traffic component, comprising the steps:
a) deriving a real significance bandpass signal (xIFr) in that the complex significance bandpass signal (xIFc) is filtered and the real part is formed from the filtered signal,
b) transforming the real significance bandpass signal (xIFr) into a first base band signal (xBB1),
c) filtering the first base band signal (xBB1) so that spectral components influenced by the traffic channel component are suppressed, and providing a first filtered signal (xLAC),
d) evaluating the first filtered signal (xLAC) and producing a binary occupancy signal (y) for indicating the occupancy of the adjacent channel in dependence on the evaluated first filtered signal.

2. Method according to claim 1, **characterised in that** the evaluation of the first filtered signal (xLAC) contains a median determination of values of a binary signal which depends on the first filtered signal (xLAC).

3. Method according to claim 1 or 2, **characterised in that** the evaluation of the first filtered signal (xLAC) contains a mean value determination of values of a signal, which depends on the first filtered signal.

4. Method according to one of claims 1 to 3, **characterised in that** the evaluation of the first filtered signal (xLAC) comprises the following steps:
a) generating a first binary signal (y1) **in that** the values of the first filtered signal (xLAC) are individually evaluated,
b) generating a second binary signal (y2) **in that** the values of the first filtered signal (xLAC) are evaluated by means of a sliding windowing,
c) generating the binary occupancy signal (y) by a logical OR linking of the first binary signal (y1) with the second binary signal (y2).

5. Method according to claim 4, **characterised in that** the values of the first filtered signal (xLAC) are individually evaluated **in that** they are compared in terms of amount with a first comparison value (V1) and the first binary signal (y1) adopts a value of logical 1 if the corresponding value of the first filtered signal (xLAC) exceeds the first comparison value (V1) in terms of amount or adopts a value of logical 0 if this is not the case.

6. Method according to claim 5, **characterised in that** the first comparison value (V1) is a threshold value.

7. Method according to one of claims 4 to 6, **characterised in that** each value of the second binary signal (y2) indicates a median of N values of a binary auxiliary signal (h), wherein N denotes the window length and the binary auxiliary signal (h) depends on the first filtered signal (xLAC).

8. Method according to claim 7, **characterised in that** the values of the first filtered signal (xLAC) are compared in terms of amount with a second comparison value (V2) and the binary auxiliary signal (h) adopts a value of logical 1 if the corresponding value of the first filtered signal (xLAC) exceeds the second comparison value (V2) in terms of amount and adopts a value of logical 0 if this is not the case.

9. Method according to claim 8, **characterised in that** the second comparison value (V2) is a threshold value.

10. Method according to one of the preceding claims, comprising the steps:
a) transforming the real significance bandpass signal (xlFr) into a second base band signal (xBB2),
b) filtering the second base band signal (xBB2) so that spectral components influenced by the adjacent channel component are suppressed, and providing a second filtered signal (xDCH),
c) evaluating the second filtered signal (xDCH) and generating the binary occupancy signal (y) in dependence on the evaluated first filtered signal and the evaluated second filtered signal.

11. Method according to claim 10 when dependent on claim 5, wherein the first comparison value (V1) depends on the second filtered signal (xDCH).

12. Method according to claim 10 when dependent on claim 8, wherein the second comparison value (V2) depends on the second filtered signal (xDCH).

13. Method according to one of the preceding claims, comprising the steps:
a) detecting the data values (d) contained in the complex significance bandpass signal (xIFc),
b) breaking off the detection step as soon as the binary occupancy signal (y) signals occupation of the adjacent channel.

14. Device (20) for recognising the occupancy of an adjacent channel with a signal based on a complex significance bandpass signal (xIFc), which has a traffic channel component and/or an adjacent channel component, comprising:
a) an analog filter unit (22) which is constructed to derive a real significance bandpass signal (xIfr) in that the complex signal bandpass signal (xIFc) is filtered and the real part is formed from the filtered signal,
b) a transformation unit (23) which is connected with the analog filter unit (22) and which is constructed to transform the real significance bandpass signal (xlFr) into a first base band signal (xBB1),
c) a digital filter unit (24) which is connected with the transformation unit (23) and which is constructed to filter the first base band signal (xBB1) in such a manner that spectral components influenced by the traffic channel component are suppressed, and to provide a first filtered signal (xLAC),
d) an evaluating unit (25) which is connected with the digital filter unit (24) and which is constructed to evaluate the first filtered signal (xLAC) and to generate a binary occupancy signal (y) for indicating the occupancy of the adjacent channel in dependence on the evaluated first filtered signal.

15. Device according to claim 14, **characterised in that** the evaluating unit (25) has a median determining unit (47) which is constructed to carry out a median determination of values of a binary signal which depends on the first filtered signal (xLAC).

16. Device according to claim 14 or 15, **characterised in that** the evaluating unit (25) comprises a mean value determining unit which is constructed to carry out a mean value determination of values of a signal which depends on the first filtered signal (xLAC).

17. Device according to one of claims 14 to 16, **characterised in that** the evaluating unit (25) comprises the following units:
a) a first evaluating unit (41) which is connected with the digital filter unit (24) and which is constructed to generate a first binary signal (y1) **in that** the values of the first filtered signal (xLAC) are individually evaluated,
b) a second evaluating unit (42) which is connected with the digital filter unit (24) and which: is constructed to generate a second binary signal (y2) **in that** the values of the first filtered signal (xLAC) are evaluated by means of a sliding windowing,
c) an OR gate (43) which is connected with the first evaluating (41) and the second evaluating unit (42) and which is constructed for generating the binary occupancy signal (y) by logical OR linking of the first binary signal (y1) with the second binary signal (y2).

18. Device according to claim 17, **characterised in that** the first evaluating unit (41) comprises the following units:
a) an amount forming unit (44) which is connected with the digital filter unit (24) and which is constructed for forming the amounts (|xLAC|) of the values of the first filtered signal (xLAC),
b) a first decision unit (45) which is connected with the amount forming unit (44) and which is constructed to compare the amounts (|xLAC|) of the values of the first filtered signal with a first comparison value (V1) and to generate the first binary signal (y1) in such a manner that it adopts a value of logical 1 if the corresponding value of the first filtered signal (xLAC) exceeds the first comparison value (V1) in terms of amount or adopts a value of logical 0 if this is not the case.

19. Device according to claim 17 or 18, **characterised in that** the second evaluating unit (42) comprises a median determining unit (47) which is constructed to generate the second binary signal (y2) in such a manner that each value of the second binary signal (y2) indicates a median of N values of a binary auxiliary signal (h), wherein N denotes the window length and the binary auxiliary signal (h) depends on the first filtered signal (xLAC).

20. Device according to claim 19, **characterised in that** the second evaluating unit (42) comprises the following units:
a) an amount forming unit (44) which is connected with the digital filter unit (24) and which is constructed for filtering the amounts (|xLAC|) of the values of the first filtered signal (xLAC),
b) a second decision unit (46) which is connected with the amount forming unit (44) and which is constructed to compare the amounts (|xLAC|) of the values of the first filtered signal with a second comparison value (V2) and to generate the binary auxiliary signal (h) in such a manner that it adopts a value of logical 1 if the corresponding value of the first filtered signal (xLAC) exceeds the second comparison value (V2) in terms of amount or adopts a value of logical 0 if this is not the case,
c) a window accumulator (48) which is connected with the second decision unit (46) and which is constructed for sliding accumulation of respective N values of the binary auxiliary signal (h),
d) a third decision unit (49) which is connected with the window accumulator (48) and which is constructed for generating the second binary signal (y2) in such a manner that it adopts a value of logical 1 if the corresponding accumulated value exceeds a value of substantially N/2 or adopts a value of logical 0 if this is not the case.

21. Device according to one of claims 14 to 20, **characterised in that**
a) the transformation unit (23) is constructed for transforming the real significance bandpass signal (xIFr) into a second base band signal (xBB2),
b) the digital filter unit (24) is constructed for filtering the second base band signal (xBB2) in such a manner that spectral components influenced by the adjacent channel component are suppressed, and of providing a second filtered signal (xDCH),
c) the evaluating unit (25) is constructed for evaluating the second filtered signal (xDCH) and generating the binary occupancy signal (y) in dependence on the evaluated first filtered signal and on the evaluated second filtered signal.

22. Device according to claim 21 when dependent on claim 18, wherein the evaluating unit (25) is constructed for providing a first comparison value (V1) dependent on the second filtered signal (xDCH).

23. Device according to claim 21 when dependent on claim 20, wherein the evaluating unit (25) is constructed for providing a second comparison value (V2) dependent on the second filtered signal (xDCH).

24. Device according to one of claims 14 to 23, comprising
a) a control unit (37), which is connected with the evaluating unit (25), for controlling a data detection unit (26) which is constructed for detecting the data values (d) contained in the complex significance bandpass signal (xIFc),
b) wherein the control unit (37) is constructed for instructing the data detection unit (26) for breaking off the current detection process when the binary occupancy signal (y) signals occupancy of the adjacent channel.

25. Transmitter/receiver device (11 - 13), particularly for a data transmission system (10) according to the IEEE standard 802.15.4 in the 2.4 GHz band, comprising an antenna (14) as well as a receiving unit (16), which is connected with the antenna, for reception of data particularly according to IEEE 802.15.4, with a device (20) for recognising the occupancy of an adjacent channel according to one of claims 14 to 24.

26. Integrated circuit, particularly for a transmitter/receiver device according to claim 25, with a device (20) according to one of claims 14 to 24.

## Revendications

1. Procédé de détection de la présence d'un signal dans un canal voisin à l'aide d'un signal de bande passante à valeurs complexes (xIFc) qui présente une composante de canal utile et/ou une composante de canal voisin, comprenant les étapes suivantes :
a) dérivation d'un signal de bande passante (xIFr) à valeurs réelles par filtrage du signal de bande passante à valeurs complexes (xIFc) et formation de la partie réelle à partir du signal filtré,
b) conversion du signal de bande passante à valeurs réelles(xIFr) en un premier signal de bande de base (xBB1),
c) filtrage du premier signal de bande de base (xBB1), de sorte que les parties du spectre influencées par la composante du canal utile soient supprimées, et fourniture d'un premier signal filtré (xLAC),
d) exploitation du premier signal filtré (xLAC) et production d'un signal binaire d'occupation (y) pour indiquer l'occupation du canal voisin en fonction du premier signal filtré exploité.

2. Procédé selon la revendication 1, **caractérisé en ce que** l'exploitation du premier signal filtré (xLAC) comporte une détermination médiane de valeurs d'un signal binaire dépendant du premier signal filtré (xLAC).

3. Procédé selon la revendication 1 ou 2, **caractérisé en ce que** l'exploitation du premier signal filtré (xLAC) comporte la détermination de moyennes de valeurs d'un signal dépendant du premier signal filtré.

4. Procédé selon l'une quelconque des revendications 1 à 3, **caractérisé en ce que** l'exploitation du premier signal filtré (xLAC) comporte les étapes suivantes:
a) production d'un premier signal binaire (y1) par exploitation individuelle des valeurs du premier signal filtré (xLAC),
b) production d'un deuxième signal binaire (y2) par exploitation des valeurs du premier signal filtré (xLAC) à l'aide d'une fenêtre glissante,
c) production d'un signal d'occupation binaire (y) par liaison logique OU entre le premier signal (y1) et le deuxième signal binaire (y2).

5. Procédé selon la revendication 4, **caractérisé en ce que** les valeurs du premier signal filtré (xLAC) sont exploitées individuellement par comparaison quantitative à un premier signal de comparaison (V1) et adoption par le premier signal binaire (y1) d'une valeur de 1 logique, au cas où la valeur correspondante du premier signal filtré (xLAC) dépasse quantitativement la première valeur de comparaison (V1), ou d'une valeur de 0 logique, si tel n'est pas le cas.

6. Procédé selon la revendication 5, **caractérisé en ce que** la première valeur de comparaison (V1) est une valeur de seuil.

7. Procédé selon l'une quelconque des revendications 4 à 6, **caractérisé en ce que** chaque valeur du deuxième signal binaire (y2) indique une valeur médiane de N valeurs d'un signal auxiliaire binaire (h), N désignant la longueur de fenêtre et le signal auxiliaire binaire (h) dépendant du premier signal filtré (xLAC).

8. Procédé selon la revendication 7, **caractérisé en ce que** les valeurs du premier signal filtré (xLAC) sont comparées quantitativement à une deuxième valeur de comparaison (V2) et **en ce que** le signal auxiliaire binaire (h) prend une valeur de 1 logique, si la valeur correspondante du premier signal filtré (xLAC) dépasse quantitativement la deuxième valeur de comparaison (V2), ou une valeur de 0 logique, si tel n'est pas le cas.

9. Procédé selon la revendication 8, **caractérisé en ce que** la deuxième valeur de comparaison (V2) est une valeur de seuil.

10. Procédé selon l'une quelconque des revendications précédentes, comportant les étapes suivantes :
a) conversion du signal de bande passante à valeurs réelles (xIFr) en un deuxième signal de bande de base (xBB2),
b) filtrage du deuxième signal de bande de base (xBB2), de sorte que les parties du spectre influencées par la composante du canal voisin soient supprimées, et fourniture d'un deuxième signal filtré (xDCH),
c) exploitation du deuxième signal filtré (xDCH) et production du signal binaire d'occupation (y) en fonction du premier signal filtré exploité et du deuxième signal filtré exploité.

11. Procédé selon la revendication 10, dépendante de la revendication 5, selon lequel la première valeur de comparaison (V1) dépend du deuxième signal filtré (xDCH).

12. Procédé selon la revendication, dépendante de la revendication 8, selon lequel la deuxième valeur de comparaison (V2) dépend du deuxième signal filtré (xDCH).

13. Procédé selon l'une quelconque des revendications précédentes, comportant les étapes suivantes :
a) détection des valeurs de données (d) contenues dans le signal de bande passante à valeurs complexes (xIFc),
b) interruption de l'étape de détection dès que le signal binaire d'occupation (y) signale l'occupation du canal voisin.

14. Dispositif (20) de détection de la présence d'un signal dans un canal voisin à l'aide d'un signal de bande passante à valeurs complexes (xIFc), présentant une composante de canal utile et/ou une composante de canal voisin, comprenant :
a) une unité de filtrage par analogie (22) conçue pour dériver un signal de bande passante à valeurs réelles (xIFr) par filtrage du signal de bande passante à valeurs complexes (xIFc) et formation de la partie réelle à partir du signal filtré,
b) une unité de transformation (23) reliée à l'unité de filtrage par analogie (22), conçue pour convertir le signal de bande passante à valeurs réelles (xIFr) en un premier signal de bande de base (xBB1),
c) une unité de filtrage digitale (24) reliée à l'unité de transformation (23), conçue pour filtrer le premier signal de bande de base (xBB1) de telle sorte que les parties du spectre influencées par la composante de canal utile soient supprimées, et pour fournir un premier signal filtré (xLAC),
d) une unité d'exploitation (25) reliée à l'unité de filtrage digitale (24), conçue pour exploiter le premier signal filtré (xLAC) et produire un signal binaire d'occupation (y) pour indiquer l'occupation du canal voisin en fonction du premier signal filtré exploité.

15. Dispositif selon la revendication 14, **caractérisé en ce que** l'unité d'exploitation (25) comprend une unité de détermination de valeur médiane (47) conçue pour effectuer une détermination médiane de valeurs d'un signal binaire, dépendant du premier signal filtré (xLAC).

16. Dispositif selon la revendication 14 ou 15, **caractérisé en ce que** l'unité d'exploitation (25) comporte une unité de détermination de valeurs moyennes, conçue pour effectuer la détermination de moyennes de valeurs d'un signal dépendant du premier signal filtré (xLAC).

17. Dispositif selon l'une quelconque des revendications 14 à 16, **caractérisé en ce que** l'unité d'exploitation (25) comporte les unités suivantes:
a) une première unité d'exploitation (41) reliée à l'unité de filtrage digitale (24), conçue pour produire un premier signal binaire (y1) par exploitation individuelle des valeurs du premier signal filtré (xLAC),
b) une deuxième unité d'exploitation (42) reliée à l'unité de filtrage digitale (24), conçue pour produire un deuxième signal binaire (y2), par exploitation des valeurs du premier signal filtré (xLAC) à l'aide d'une fenêtre glissante,
c) une porte OU (43) reliée à la première unité d'exploitation (41) et à la deuxième unité d'exploitation (42), conçue pour produire le signal binaire d'occupation (y) par une liaison logique OU entre le premier signal binaire (y1) et le deuxième signal binaire (y2).

18. Dispositif selon la revendication 17, **caractérisé en ce que** la première unité d'exploitation (41) comporte les unités suivantes :
a) une unité de formation quantitative (44) reliée à l'unité de filtrage digitale (24), conçue pour former les quantités (|xLAC|) des valeurs du premier signal filtré (xLAC),
b) une première unité de décision (45) reliée à l'unité de formation quantitative (44), conçue pour comparer les quantités (|xLAC|) des valeurs du premier signal filtré à une première valeur de comparaison (V1) et produire le premier signal binaire (y1) de telle sorte qu'il prend une valeur de 1 logique si la valeur correspondante du premier signal filtré (xLAC) dépasse quantitativement la première valeur de comparaison (V1), ou une valeur de 0 logique, si tel n'est pas le cas.

19. Dispositif selon la revendication 17 ou 18, **caractérisé en ce que** la deuxième unité d'exploitation (42) comporte une unité de détermination de valeur médiane (47), conçue pour produire le deuxième signal binaire (y2) de telle sorte que chaque valeur du deuxième signal binaire (y2) indique une valeur médiane de N valeurs d'une signal auxiliaire binaire (h), N désignant la longueur de fenêtre et le signal auxiliaire binaire (h) étant fonction du premier signal filtré (xLAC).

20. Dispositif selon la revendication 19, **caractérisé en ce que** la deuxième unité d'exploitation (42) comporte les unités suivantes :
a) une unité de formation quantitative (44) reliée à l'unité de filtrage digitale (24), conçue pour former les quantités (|xLAC|) des valeurs du premier signal filtré (xLAC),
b) une deuxième unité de décision (46) reliée à l'unité de formation quantitative (44), conçue pour comparer les quantités (|xLAC|) des valeurs du premier signal filtré à une deuxième valeur de comparaison (V2) et produire le signal auxiliaire binaire (h) de telle sorte qu'il prend une valeur de 1 logique si la valeur correspondante du premier signal filtré (xLAC) dépasse quantitativement la deuxième valeur de comparaison (V2), ou une valeur de 0 logique, si tel n'est pas le cas,
c) un accumulateur de fenêtres (48) relié à la deuxième unité de décision (46), conçu pour accumuler de manière glissante respectivement N valeurs du signal auxiliaire binaire (h),
d) une troisième unité de décision reliée à l'accumulateur de fenêtres (48), conçue pour produire le deuxième signal binaire (y2) de telle sorte qu'il prend une valeur de 1 logique si la valeur accumulée correspondante dépasse une valeur sensiblement de N/2, ou une valeur de 0 logique, si tel n'est pas le cas.

21. Dispositif selon l'une quelconque des revendications 14 à 20, **caractérisé en ce que** :
a) l'unité de transformation (23) est conçue pour convertir le signal de bande passante à valeurs réelles (xIFr) en un deuxième signal de bande de base (xBB2),
b) l'unité de filtrage digitale (24) est conçue pour filtrer le deuxième signal de bande de base (xBB2) de telle sorte que des parties du spectre influencées par la composante de canal voisin soient supprimées et pour fournir un deuxième signal filtré (xDCH),
c) l'unité d'exploitation (25) est conçue de manière à exploiter le deuxième signal filtré (xDCH) et produire le signal d'occupation binaire (y) en fonction du premier signal filtré exploité et du deuxième signal filtré exploité.

22. Dispositif selon la revendication 21, dépendante de la revendication 18, dans lequel l'unité d'exploitation (25) est conçue de manière à prévoir une première valeur de comparaison (V1) dépendante du deuxième signal filtré (xDCH).

23. Dispositif selon la revendication 21, dépendante de la revendication 20, dans lequel l'unité d'exploitation (25) est conçue de manière à prévoir une deuxième valeur de comparaison (V2) dépendante du deuxième signal filtré (xDCH).

24. Dispositif selon l'une quelconque des revendications 14 à 23, comprenant :
a) une unité de commande (37) reliée à l'unité d'exploitation (25) pour commander une unité de détection de données (26), conçue pour détecter les valeurs de données (d) contenues dans le signal de bande passage à valeurs complexes (xIFc),
b) l'unité de commande (37) étant conçue pour donner à l'unité de détection de données (26) la consigne d'interrompre le processus de détection en cours si le signal d'occupation binaire (y) signale l'occupation du canal voisin.

25. Dispositif émetteur/récepteur (11-13), plus particulièrement pour un système de transmission de données (10) selon le standard de l'Institut américain des Ingénieurs électriciens et électroniciens IEEE 802.15.4 dans la bande de 2.4 GHz, comprenant une antenne (14) ainsi qu'une unité réceptrice reliée à l'antenne pour recevoir des données, plus particulièrement selon IEEE 802.15.4, et comprenant un dispositif (20) pour la détection de l'occupation d'un canal voisin selon l'une quelconque des revendications 14 à 24.

26. Circuit intégré, plus particulièrement pour un dispositif émetteur/récepteur selon la revendication 25, comprenant un dispositif (20) selon l'une quelconque des revendications 14 à 24.
